# FASCICULE DE BREVET EUROPEEN

(11) **EP 0 354 199 B1**
(45) Date de publication et mention de la délivrance du brevet: **19.05.1993**
(21) Numéro de dépôt: 89870112.3
(22) Date de dépôt: 19.07.1989
(51) Int. Cl.: A23L 1/308, A23K 1/16

(54) **Ingrédient nutritionnel pour l'alimentation humaine ou animale et son utilisation pour la fabrication de produits alimentaires**
Nahrungsbestandteil für die menschliche oder tierische Nahrung und seine Verwendung zur Herstellung von Nahrungsmitteln
Nutritive ingredient for human or animal nutrition, and its use in preparing food products

(30) Priorité: 01.08.1988 BE 8800890
(43) Date de publication de la demande: 07.02.1990
(73) Titulaire: RAFFINERIE TIRLEMONTOISE, 1150 Bruxelles (BE)
(72) Inventeur: Smits, Georges, B-9308 Gijzegem-Aalst (BE); Coussement, Paul, B-3000 Leuven (BE); De Leenheer, B-1980 Tervuren (BE)
(74) Mandataire: Schmitz, Yvon

(56) Documents cités:
- EP-A- 0 166 362
- CH-A- 401 657
- FR-A- 1 565 494
- US-A- 3 947 604

## Description

La présente invention est relative à l'utilisation des β-1-4-D-glucanes pour l'alimentation humaine ou animale.

Les β-1-4 D-glucanes, qui sont des oligosaccharides composés de molécules de D-glucose liées en β(1-4), sont obtenus par hydrolyse enzymatique et/ou acide de cellulose, par production microbienne ou encore par synthèse enzymatique, par l'utilisation de β-glucosidases et cellulases doués d'activité de condensation et de trans-glycosylation ou d'autres glycosyltransferases (par exemple du type phosphorylase), avec du glucose ou de la cellobiose comme substrats.

Dans le cas de l'hydrolyse enzymatique ou acide de la cellulose, la cellulose utilisée peut être sous sa forme de bois et de ses dérivés, de produits résultant d'un procédé utilisé dans l'agriculture (son de blé, pulpe de betteraves, paille, etc.) ou d'un produit purifié par des moyens chimiques ou mécaniques. les produits de base qui contiennent une quantité importante de composants non cellulosiques peuvent subir un traitement préalable. Ce traitement préalable peut être réalisé par un processus chimique et/ou mécanique. Lorsque l'on produit des β-1-4 D-glucanes par hydrolyse enzymatique, on a avantage à prétraiter la cellulose de manière à modifier sa structure cristalline. Ce procédé peut être réalisé par un traitement de la cellulose par des solutions de divers types (en utilisant. par exemple, des solvants aprotiques, des solutions d'éthylène diamine, des acides éventuellement enrichis de sels métalliques), ou par un traitement alcalin. les enzymes utilisées pour la dégradation sont du type β-D glucane-4-glucanohydrolase (endoglucanases et cellobiohydrolases, par exemple E.C. 3.2.1.4. et E.C. 3.2.1.91). Ces enzymes peuvent être obtenues par exemple au départ de moisissures (par exemple Trichoderma, Aspergillus, Penicillium), d'actinomycètes (par exemple Streptomyces) ou de bactéries (par exemple Cellvibrio, Clostridium). La quantité des enzymes à utiliser, la durée, la température et le pH de la réaction sont choisis en fonction du type de cellulase utilisé, des caractéristiques du substrat et du degré de polymérisation des glucanes désirés.

Dans le cas d'une hydrolyse acide, l'acide peut être organique ou inorganique et l'on utilise en général l'HCL, l'H₂SO₄ ou l'HF. Dans le cas de l'HCl, on peut ajouter une à vingt fois la quantité d'HCl concentré par quantité unitaire de cellulose, et réaliser cette hydrolyse pendant plusieurs heures d'affilée. Après précipitation de la partie non hydrolysée, on filtre le précipité, on neutralise le filtrat et on le déssale. Dans le cas de l'HF, on peut l'utiliser liquide ou gazeux. Le rapport HF/cellulose peut se situer entre 0,01 et 10. Après traitement, on sépare l'HF en prenant soin de ne pas repolymériser les monomères.

Pour ce qui est de la production microbienne de β-1-4 D-glucanes, on préfère utiliser comme micro-organismes le genre Acetobacter, que l'on cultive sur une base contenant du glucose, du maltose ou du sucrose comme source de carbone, des acides organiques, des sources d'azote et des sels minéraux. La culture est réalisée dans un milieu légèrement acide, pendant une période dépendant du degré de polymérisation des oligosaccharides désirés.

Dans le cas d'une synthèse enzymatique des glucanes, on peut utiliser le glucose comme substrat. Dans une première étape, on obtient de la cellobiose par condensation du glucose. Dans une seconde étape, la cellobiose est transformée en cellotriose par transglycosylation. Les deux étapes peuvent être réalisées par des enzymes du type β-glucosidase-cellulase du commerce, immobilisées ou libres. On peut obtenir des polymères d'un degré de polymérisation plus élevé par l'action d'enzymes de transglycosylation sélectionnées. On trouve parmi ces enzymes les cellobiose -phosphorylases et les cellodextrine-phosphorylases, produites par exemple par des bactéries du genre Clostridum, Cellvibrio ou Cellulomonas. Dans ce cas, il est avantageux d'utiliser le sucrose comme substrat après l'avoir transformé en phosphate de glucose par l'action d'une enzyme sucrose-phosphorylase.

Le glucose formé pendant l'hydrolyse, ou résiduel après les réactions de synthèse, peut être séparé des β-1-4 D-glucanes par séparation chromatographique, oxydé par voie enzymatique en produisant l'acide gluconique qui est ensuite séparé, ou par toute autre méthode adéquate.

Un des buts de l'invention est de fournir un ingrédient nutritionnel pour l'alimentation humaine ou animale, peu cariogène, bifidogène et présentant des caractéristiques de fibre alimentaire supérieures à celles de la cellulose.

Par définition, les fibres alimentaires sont des composés d'origine végétale présents dans les structures pariétales, et non digérés par les enzymes digestives. Ces composés sont d'une manière générale des polysaccharides non amylacés, de la cellulose et des hémicelluloses, des pectines, des gommes et mucilages ainsi que des lignines. Cette définition peut, par extension, s'appliquer également aux composés qui ont des effets physiologiques identiques, à savoir : cutine, subérine et cire, phytates, amidons résistants, oligosaccharides non digestibles, ainsi qu'aux produits nés de la transformation technologique des aliments et qui sont analysés comme "fibre" lors des déterminations gravimétriques : produits de la réaction de Maillard, de la transglycosylation des amidons.

Les fibres alimentaires exercent des effets physiologiques pléiotropes dont l'origine est due à leur présence dans la lumière du tractus gastro-intestinal. De tels effets peuvent être communs à plusieurs types de fibres ou spécifiques d'un petit nombre de composés. Du fait de leur résistance aux processus digestifs, la plupart des fibres accélèrent le transit intestinal et augmentent la masse fécale. Du fait de leur capacité d'absorber l'eau, certains ions (Fe, Zn, Ca, etc.), les sucres, les acides biliaires, etc., les fibres peuvent avoir divers effets :
- retard et ralentissement de l'absorption des sucres avec étalement de la réponse glycémique postprandiale;
- augmentation de l'excrétion des sels biliaires, réduction de l'absorption du cholestérol et diminution de la cholestérolémie;
- malabsorption de certains ions et réduction des risques de lithiase biliaire ou urinaire.

Du fait de leur capacité à être fermentées par la flore microbienne colique, certaines fibres peuvent :
- augmenter la masse de cette flore mais aussi en changer la composition;
- améliorer le métabolisme des composés azotés et réduire la production d'urée ou de NH₃ en entraînant une acidification des selles.

Les différents effets physiologiques des fibres peuvent être utilisés à des fins thérapeutiques. Les principales applications sont la prévention des lithiases biliaires et urinaires, du cancer colique et de l'obésité ainsi que le traitement du diabète.

La cellulose, qui est un β-1-4-polysaccharide, n'est pas digérée par les amylases et elle est peu voire non fermentée par la flore fécale normale. Son effet est avant tout un effet volumique. Sa capacité d'absorber l'eau réduit sa capacité de fixation des sels biliaires. Elle n'a pratiquement pas de valeur calorique. Ses effets majeurs sont l'accélération du transit intestinal et l'augmentation du poids des fèces, qui est largement dû à l'excrétion du polysaccharide resté intact mais imbibé d'eau. Chez l'homme, la consommation d'un gramme de cellulose augmente d'environ 3 g le poids des selles. Cette valeur est d'environ 2 g chez le rat et elle évolue proportionnellement à la quantité de cellulose ingérée pour des taux variant entre 1 et 10% de la ration alimentaire journalière.

Lors de son application comme fibre alimentaire, la cellulose telle quelle est limitée par ses propriétés physicochimiques, notamment par sa faible solubilité et son goût désagréable. On peut réduire les dimensions des particules de la cellulose par des traitements chimiques ou mécaniques afin d'essayer d'améliorer ces propriétés. Les brevets US 3.539.365, CH 401.657 et US 3.947.604 (FMC) décrivent l'utilisation de petites particules de cellulose "microcristalline" comme agent de dispersion et de stabilisation dans l'alimentation. Cependant la cellulose ainsi traitée garde un haut degré de polymérisation et reste très cristalline, conserve par conséquent toujours le désavantage d'être insoluble et peu ou pas fermentescible par la microflore dans le colon de l'être humain.

La demande de brevet EP-A-0 166 362 concerne un procédé de préparation de polysaccharides solubles dans l'eau, qui peuvent être utilisés comme additifs alimentaires. Ce procédé consiste notamment à faire réagir du glucose ou des hydrates de carbone dont au moins 50 % des unités monomères sont du glucose avec des polyalcools en présence d'acide fluorhydrique (HF). Outre le glucose un grand nombre d'autres matières de départ peuvent être utilisées, telles que d'autres disaccharides, oligosaccharides et polysaccharides, comme par exemple la cellobiose, la cellotriose et les cellodextrines (α- ou β-1,4-glucanes). Cependant, aucune propriété ou activité nutritionnelle ou autre, spécifique concernant ces autres substances de départ n'a été développée ni même suggérée et la configuration structurale des polysaccharides ainsi obtenus est totalement différente de celle des β-1-4-glucanes.

L'invention prévoit l'utilisation des β-1-4-D-glucanes présentant un degré de polymérisation (DP) entre 2 et 20 pour la préparation d'un ingrédient nutritionnel pour l'alimentation humaine ou animale, peu cariogène, bifidogène et présentant des caractéristiques de fibre alimentaire.

Suivant une forme de réalisation de l'invention, les β-1-4-D-glucanes sont à un seul degré de polymérisation.

Suivant une forme de réalisation avantageuse de l'invention, l'ingrédient nutritionnel comprend un mélange d'au moins deux β-1-4-D-glucanes de degrés de polymérisation différents.

L'on a constaté, par exemple, qu'à un mélange de 1 g de β-1-4-D-glucanes d'un degré de polymérisation allant de 2 à 8, ingéré par le rat, correspond généralement un accroissement de la masse fécale de plus de 4 g. Cette différence est vraisemblablement due au fait que les glucanes forment une source d'énergie nutritive pour la flore fécale et ont, en même temps, une capacité plus grande d'absorption d'eau qui pourrait favoriser une prolifération de la flore microbienne.

L'invention prévoit également l'utilisation des β-1-4-D-glucanes présentant un degré de polymérisation (DP) entre 2 et 20 pour la préparation d'un produit pour l'alimentation humaine ou animale contenant un ingrédient nutritionnel tel que décrit ci-dessus, en mélange avec d'autres ingrédients alimentaires, ledit ingrédient constituant de 0,01 à 98 % en poids sur la matière sèche du mélange d'ingrédients.

Comme exemples de β-1-4-D-glucanes présentant un degré de polymérisation entre 2 et 20, on citera la cellobiose (0-β-D-glucopyranosyl-(1→4)-D-glucose), la cellotriose (0-β-D-glucopyranosyl)-(1→4)-0-3-D-glucopyranosyl)-(1→4)-D-glucose), la cellotétraose (0-β-D-glucopyranosyl)-[(1→4)-0-β-D-glucopyranosyl]₂-(1→4)-D-glucose) et la cellopentaose (0-β-D-glucopyranosyl)-[(1→4)-0-β-D-glucopyranosyl)]₃-(1→4)-D-glucose).

La qualité de la flore fécale a une influence importante sur le métabolisme et la santé de l'organisme. C'est ainsi que l'on a constaté qu'un certain nombre de micro-organismes avaient une influence salutaire sur la santé et que d'autres étaient plutôt de caractère nocif ou putréfactif. Il a également été prouvé que la constitution de l'alimentation joue un rôle important sur la composition et l'activité de la flore microbienne intestinale. En administrant des facteurs de croissance sélectifs, on peut aider les "bons" micro-organismes et éliminer (en grande partie) les "mauvais". Ces "facteurs de croissance" ne peuvent pas être digérés par le système digestif, mais arrivent intacts sur leur lieu d'action : le colon, où la flore fécale les utilise comme substrat.

Un groupe important de micro-organismes "salutaires" pour l'homme est formé par le genre Bifidobacterium. Une population active de Bifidobacterium dans les intestins peut entre autres régler le débit fécal, améliorer les cas de diarrhée ou de constipation, faciliter l'excrétion de substances cancérigènes et exercer un effet positif sur les concentrations en cholestérol dans le sang. Un tel effet positif d'un aliment sur le métabolisme via une prolifération de Bifidobacterium est appelé l'effet "bifidogène". On a constaté que les β-1-4 D-glucanes suivant l'invention avaient des effets bifidogènes.

Les β-1-4 D-glucanes présentant un degré de polymérisation entre 2 et 20 de l'invention peuvent, par conséquent, avoir des effets nutritifs bénéfiques et exceptionnels pour l'homme et l'animal. Ces effets proviennent en fait d'un "effet fibre" prononcé (supérieur à celui de la cellulose), dû au fait que ces oligosaccharides ne sont pas dirigés par les enzymes digestives normales, mais sont fermentés dans le colon, et d'un effet bifidogène, dû au fait que ces oligosaccharides favorisent la présence de la population de Bifidobacterium dans les intestins. Ces β-1-4 D-glucanes sont en même temps peu ou non digestibles par la flore buccale, et n'entraînent donc que très peu de cariogénicité.

Suivant l'invention, ces β-1-4 D-glucanes présentant un degré de polymérisation entre 2 et 20 peuvent être utilisés comme ingrédients pour l'alimentation humaine ou animale, à usage oral, pour donner du corps et un goût doux à l'alimentation courante, sans augmenter le risque de caries, avec peu d'apport de calories supplémentaires, avec les avantages d'un "effet fibre" prononcé et de la stimulation de la population de Bifidobacterium dans les intestins. L'ingrédient alimentaire constitué essentiellement de β-1-4 D-glucanes peut être associé à d'autres ingrédients alimentaires, tels que des hydrates de carbone, lipides, protéines, eau, colorants, améliorateurs de goût, épaississants, acides alimentaires, édulcorants, pour la réalisation de produits alimentaires. D'une manière générale, l'ingrédient précité constitue de 0,01 à 100 % en poids, sur la matière sèche du mélange, et de préférence de 0,1 à 98 % en poids du mélange d'ingrédients alimentaires.

Suivant l'invention, ces β-1-4 D-glucanes présentant un degré de polymérisation entre 2 et 20 peuvent également servir d'ingrédients dans l'alimentation courante des jeunes animaux domestiques, notamment du bétail, servant de promoteurs de croissance et d'agents anti-diarrhéiques. Leur administration dans l'alimentation courante constitue, par conséquent, un excellent procédé d'élevage des jeunes animaux domestiques.

On donne ci-après deux exemples de β-1-4 D-glucanes de l'invention et de ses effets avantageux, ainsi qu'un certain nombre d'exemples de préparations de produits alimentaires réalisés à base d'ingrédients suivant l'invention.

### Test de cariogénicité

Une quantité de 30 ml d'une solution à 10 % de matière sèche, composée d'environ 2 % en DP1, 29 % en DP2, 34 % en DP3, 26 % en DP4 et 9 % en DP5 et plus, a été administrée à trois volontaires humains équipés de miniélectrodes dentaires selon la procédure "Simplified In Vivo pH measurements of oral Microbial Deposits - : Helo odont - Acta 15,42;1971". Le pH mesuré pendant 30 minutes ne descendait pas en dessous de 6,0. Cette méthode est utilisée en Suisse et dans plusieurs autres pays pour évaluer la cariogénicité de produits. Un produit dont le pH ne descend pas en dessous de 5,7 est considéré comme non cariogène.

### Test de la flore fécale (caractère bifidogène)

Un groupe de 10 rats mâles Wistar (c.p.b.w.u.) exempts de germes pathogènes, âgés de 8 semaines, placés par paire dans des cages métalliques grillagées, a subi le traitement suivant. Après une phase d'accoutumance au local et une phase d'accoutumance au régime standard, on leur a administré pendant 8 semaines un régime contenant 11 % en poids de β-1-4 D-glucanes, avec une composition d'environ 21 % en glucose, 17 % en DP2, 19 % en DP3, 20 % en DP4, 15 % en DP5, 6 % en DP6 et 2 % en DP7 et plus. Ce régime contenait 20 % en lipides. La composition en bifidobactéries de la flore fécale a été mesurée deux fois par semaine pour chaque rat selon la méthode de Mitsuoka. Les résultats ont été comparés avec les résultats d'un groupe de contrôle, se composant de 10 rats, qui ont suivis le même traitement mais avec un régime exempt de β-1-4 D-glucanes. On a constaté que la quantité moyenne de bifidobactéries était de l'ordre de 3.10⁸ bactéries/ml de selle. Pour les rats du groupe de contrôle, la quantité moyenne était de l'ordre de 10⁵. Ceci montre clairement la quantité bifidogène du mélange de β-1-4 D-glucanes de l'invention.

### Test de l'effet fibre

Un groupe de 10 rats mâles Wistar (c.p.b.w.u.) exempts de germes pathogènes, âgés de 8 semaines, placés par paire dans des cages métalliques grillagées, a subi le traitement suivant. Après une phase d'accoutumance au local et une phase d'accoutumance au régime standard, on leur a administré pendant 2 semaines un régime contenant 2,5 % en poids de β-1-4 D-glucanes, avec une composition comme décrite dans le test de la flore fécale. Ce régime contenait 5 % de lipides. On a mesuré 3 fois par semaine la consommation alimentaire et le débit fécal des rats par cage. Les selles ont été analysées pour leur contenu en β-1-4 D-glucanes. On a constaté que le débit fécal moyen par rat était de 3,2 g/jour. Dans les mêmes conditions, un régime de cellulose incorporée à 5 % donne un débit fécal de 2 g/jour. Un régime sans fibre induit un débit fécal de 0,3 g/jour. L'augmentation du débit fécal est de 4,5 g par g de glucanes ingérés.

L'analyse des selles montre que cette alimentation n'est pas seulement due à la présence des glucanes et à leur capacité d'absorption d'eau. En fait, les glucanes ne se retrouvent que partiellement dans les fèces, et sont donc pour une grande partie métabolisés par les micro-organismes, qui s'y retrouvent en plus grandes quantités.

### Exemple 1 - Préparation d'un mélange de β-1-4 D-glucanes par voie enzymatique

On prépare un mélange de β-1-4 D-glucanes par une conversion enzymatique de cellulose régénérée. La cellulose utilisée est une pulpe commerciale de bois doux, avec une teneur importante en α-cellulose (90-92 %) et une viscosité basse (20 - 35 mPas). La cellulose est moulue sèche, filtrée et prétraitée avec de l'acide phosphorique à 85 %. A 450 ml d'H₃PO₄ (85 %), on ajoute 25 g de cellulose séchée à l'air, en agitant doucement et à basse température (2 à 4°C). On maintient le mélange à cette température pendant 3 heures. On ajoute 3 litres d'eau distillée à la même température, et on procède à un mélange et à un filtrage. Ce lavage est répété deux fois de suite. La cellulose est ensuite mise en suspension dans une solution à 1 % de Na₂CO₃ et laissée au repos pendant une nuit à basse température (2-4°C). Ensuite, on poursuit le lavage jusqu'à l'obtention d'un pH de 5-5,5 dans la suspension concentrée, après quoi on la maintient à une température de 2-4°C. L'hydrolyse enzymatique est effectuée à 50°C. La cellulose est incubée à une concentration de 4 % (matière sèche) à pH de 4,8 dans un agitateur. On ajoute l'enzyme (Celluclast 1,5 L - NOVO) à une teneur de 10 UI/g de cellulose (basée sur Filter Paper Activity en U/ml, réf. Mandels et coll., 1976). Après une incubation de 4 heures, on arrête la réaction en chauffant le mélange. Après filtration pour séparer les substances insolubles, on déminéralise la solution sur colonne d'échange d'ions. On enlève le glucose et autres sucres, tels que pentoses, par une séparation chromatographique. On concentre la solution et on la sèche par lyophilisation.

L'hydrolysat obtenu contient environ 2 % de glucose et des β-1-4 D-glucanes avec une distribution caractéristique d'environ 75 % de DP2, 20 % de DP3, 5 % de DP4 et plus.

### Exemple 2 - Préparation d'un mélange de β-1-4 D-glucanes par voie chimique

Dans ce cas, la cellulose de l'Exemple 1 est moulue sèche jusqu'au moment où 99 % des particules ont un diamètre inférieur à 160 µ. On prend 50 g de cette pulpe de cellulose, on y ajoute 60 ml d'eau et 250 ml d'une solution qui contient 74 % de ZnCl₂ et 0,5 % de HCl. Après avoir bien mélangé la pâte obtenue, on la chauffe pendant 10 minutes à 120°C. On y ajoute 200 ml d'eau et après homogénisation, le tout est à nouveau chauffé à 93°C pendant 30 minutes.

Le procédé se poursuit en versant la suspension de cellulose dans un récipient suffisamment grand et en y ajoutant 3 l d'acétone. Le tout est mis au réfrigérateur pendant une nuit afin que les oligosaccharides et la cellulose non hydrolysée puisse précipiter. La suspension est filtrée sur un filtre Whatman n° 1, le résidu est lavé 3 fois à l'acétone et ensuite séché à 80°C.

Le résidu sec est repris dans 300 ml d'eau et incubé pendant 4 heures à 50°C. Il est centrifugé pendant 10 minutes à 6000 tours/mn⁻¹. Le culot obtenu est lavé avec 200 ml d'eau et à nouveau incubé pendant 4 heures à 50°C avant d'être centrifugé une dernière fois.

Les matières surnageantes sont collectées, déminéralisées et concentrées.

Par cette procédure on obtient un produit qui contient, d'une part, 8 % de glucose et, d'autre part, des β-1-4 D-glucanes présentant une distribution caractéristique d'environ 12 % de DP2, 16 % de DP3, 19 % de DP4, 19 % de DP5, 14 % de DP6 et 12 % de DP7.

### Exemple 3 - Préparation de sorbet

79 parties de purée de fraises (6 % de matière sèche), 20 parties (matière sèche) de produit de l'Exemple 1, 1 partie de stabilisant (Fructodan SL64, Grindsted Products A/S) et moins d'une partie d'édulcorant intense (Aspartame) sont mélangées et introduites dans un réfrigérateur classique. La température de sortie du réfrigérateur est de -5°C. Le foisonnement est de 60 %. La matière sèche est de 25 %. Ce produit est un sorbet au goût agréable, exempt de cristallisation gênante et avec un excellent comportement à la fonte. Il convient comme sorbet, faiblement cariogène, bifidogène, ayant des propriétés prononcées de fibre diététique.

### Exemple 4 - Préparation de confiture

500 g d'abricots (10 % de matière sèche), 125 g de matière sèche de produit de l'Exemple 1, 156 g de sirop de glucose DE 60 (80 % de matière sèche), 130 g de solution de pectine Medium Rapid Set 150° SAG, Mero-Rousselot-Satia (5 g de pectine adaptée à une confiture à faible matière sèche, mise en solution dans 125 g d'eau), 125 g d'eau et moins d'un g d'édulcorant artificiel Acesulfame K sont mélangés et cuits à pression atmosphérique jusqu'à l'obtention de 997,5 g de produit. On ajoute 5 ml d'une solution d'acide citrique à 50 % et on mélange. Ce produit est une confiture bien gélifiée à haute teneur en fruits. Elle convient comme confiture, faiblement cariogène, bifidogène, ayant des propriétés prononcées de fibre diététique.

### Exemple 5 - Préparation de boisson carbonatée

100 parties de matière sèche du produit de l'Exemple 1, 2 parties d'acide citrique, une partie d'arômes (citron soluble n° 10068/1, Perlarom) et moins d'une partie d'édulcorants à haut pouvoir sucrant (60 % d'aspartame - 40 % Acesulfame K) sont diluées dans de l'eau carbonatée jusqu'à l'obtention de 1000 parties d'une boisson rafraîchissante sans alcool. Ce produit est une boisson sans arrière-goût, relativement stable lors de la conservation et avec un excellent goût. Elle convient comme boisson non cariogène et bifidogène, avec des propriétés prononcées de fibre diététique.

### Exemple 6 - Préparation d'un sucre cuit

Comme ingrédients, on utilise pour 150 g à 100 % de matière sèche :

### Composant A :

- 120 g en matière sèche de sirop de glucose DE 40,
- 30 g en matière sèche de β-1-4 D-glucanes tels que décrits dans l'Exemple 1,
- 50 g d'eau;

### Composants B :

- 1,1 g de cristaux d'acide citrique,
- 0,075 ml de colorant jaune E102 (Naarden Int.),
- 0,3 ml d'arôme de citron DB01065 (Naarden Int.).

On chauffe les ingrédients du composant A jusqu'à l'obtention d'une solution claire, et on les bout ensuite jusqu'à évaporation presque totale de l'eau. La venue (solution pâteuse) est versée sur une table froide, et les ingrédients du composant B sont ajoutés. La venue est refroidie de façon homogène et est ensuite passée dans une formeuse. De cette façon, on obtient des sucres cuits avec une bonne consistance, avec un goût suffisamment doux et très agréable, avec un aspect clair et dur et une bonne activité d'eau. Ils ont l'avantage d'avoir un effet fibre bénéfique pour le corps et de stimuler les bons micro-organismes dans les intestins.

## Revendications

1. Utilisation des β-1-4-D-glucanes présentant un degré de polymérisation (DP) entre 2 et 20 pour la préparation d'un ingrédient nutritionnel pour l'alimentation humaine ou animale, peu cariogène, bifidogène et présentant des caractéristiques de fibre alimentaire.

2. Utilisation suivant la revendication 1, caractérisée en ce que les β-1-4-D-glucanes sont à un seul degré de polymérisation.

3. Utilisation suivant l'une ou l'autre des revendications 1 et 2, caractérisée en ce que l'ingrédient nutritionnel contient un mélange d'au moins deux β-1-4-D-glucanes de degrés de polymérisation différents.

4. Utilisation suivant l'une quelconque des revendications 1 à 3, caractérisée en ce que les β-1-4-D-glucanes ont un degré de polymérisation de 2 à 8.

5. Utilisation des β-1-4-D-glucanes présentant un degré de polymérisation (DP) entre 2 et 20 pour la préparation d'un produit pour l'alimentation humaine ou animale contenant un ingrédient nutritionnel suivant l'une quelconque des revendications 1 à 4, en mélange avec d'autres ingrédients alimentaires, ledit ingrédient constituant de 0,01 à 98 % en poids sur la matière sèche du mélange d'ingrédients.

6. Utilisation d'un ingrédient ou produit suivant l'une quelconque des revendications 1 à 5, destiné à la préparation d'un supplément nutritionnel destiné à l'amélioration de l'activité et de la composition de la flore intestinale.

7. Procédé d'élevage d'animaux domestiques, caractérisé en ce qu'il comprend l'administration à ceux-ci d'un produit susceptible d'être obtenu par l'utilisation de la revendication 5.

## Patentansprüche

1. Verwendung von β-1-4-D-Glucane, die einen Polymerisierungsgrad (PD) zwischen 2 und 20 aufweisen, zur Herstellung eines Nahrungsbestandteils für die menschliche oder tierische Nahrung, der wenig kariogen, bifidogen ist und Merkmale von Nahrungsfasern aufweist.

2. Verwendung gemäß Anspruch 1, dadurch gekennzeichnet, daß die β-1-4-D-Glucane nur einen Polymerisierungsgrad aufweisen.

3. Verwendung nach einem der Ansprüche 1 oder 2, dadurch gekennzeichnet, daß der Nahrungsbestandteil eine Mischung aus mindestens zwei β-1-4-D-Glucane mit verschiedenen Polymerisierungsgraden umfaßt.

4. Verwendung nach einem der Ansprüche 1 bis 3, dadurch gekennzeichnet, daß die β-1-4-D-Glucane einen Polymerisierungsgrad von 2 bis 8 aufweisen.

5. Verwendung der β-1-4-D-Glucane, die einen Polymerisierungsgrad (DP) zwischen 2 und 20 aufweisen, für die Herstellung eines Produkts für die menschliche oder tierische Nahrung, das einen Nahrungsbestandteil gemäß einem der Ansprüche 1 bis 4 beinhaltet, wobei dieser Bestandteil 0,01 bis 98 Gew. % der Trockenmasse der Mischung der Bestandteile ausmacht.

6. Verwendung eines Bestandteils oder Produkts gemäß einem der Ansprüche 1 bis 5, der bzw. das zur Herstellung eines Nahrungszusatzes zur Verbesserung der Aktivität und Zusammensetzung der Darmflora bestimmt ist.

7. Verfahren zur Aufzucht von Nutzvieh, dadurch gekennzeichnet, daß man ihnen ein durch die Verwendung des Anspruchs 5 erhaltenes Produkt verabreicht.

## Claims

1. Use of β-1-4-D-glucane having a degree of polymerisation (DP) of between 2 and 20 for the preparation of a nutritional ingredient exhibiting alimentary fibre characteristics for the feeding of humans or animals and is of low cariogenic, bifodogenic character.

2. Use according to claim 1, characterised in that the β-1-4-D-glucanes have only one degree of polymerisation.

3. Use according to one or other of claims 1 and 2, characterised in that the nutritional ingredient contains a mixture of at least two β-1-4-D glucanes having different degrees of polymerisation.

4. Use according to any one of claims 1 to 3, characterised in that the β-1-4-D-glucanes have a degree of polymerisation from 2 to 8.

5. Use of β-1-4-D-glucanes having a degree of polymerisation (DP) of between 2 and 20 for the preparation of a product for human or animal feeding and containing a nutritional ingredient according to any one of claims 1 to 4, in mixture with other alimentary ingredients, the said ingredient constituting from 0.01 to 98% by weight of the mixture of ingredients, in terms of the dry matter.

6. Use of an ingredient or product according to any one of claims 1 to 5, intended for preparation of a nutritional supplement intended to improve the activity and composition of the intestinal flora.

7. A method of rearing domestic animals, characterised in that it comprises administering to them a product capable of being obtained by the application of claim 5.
